# EUROPEAN PATENT SPECIFICATION

(11) **EP 2 114 215 B1**
(45) Date of publication and mention of the grant of the patent: **18.06.2014**
(21) Application number: 07711487.4
(22) Date of filing: 09.02.2007
(51) Int. Cl.: A47F 5/00, A47F 3/04

(54) **REFRIGERATING SALES CABINET**
KÜHLVERKAUFSSCHRANK
ARMOIRE FRIGORIFIQUE DE VENTE

(43) Date of publication of application: 11.11.2009
(73) Proprietor: Carrier Corporation, Farmington, CT 06034 (US)
(72) Inventor: BAEHR, Klaus, 64720 Michelstadt (DE); STEINER, Alfred, 55246 Mainz-Kostheim (DE)
(74) Representative: Waibel, Stefan Christopher
(86) International application number: PCT/EP2007/001118
(87) International publication number: WO 2008/095514

(56) References cited:
- EP-A- 1 183 969
- EP-A1- 1 600 084
- EP-A2- 0 293 894
- DE-A1- 2 523 929
- DE-A1- 19 902 627
- JP-A- 5 317 127
- JP-A- 5 337 031
- US-A- 2 883 253

## Description

The invention relates to a Refrigerating sales cabinet.

Goods to be sold have to be introduced and removed by hand in the shelves of shelf-type refrigerating furnitures. This involves expenditures in terms of manpower and time and is expensive. Moreover, the manual placement during sales hours and customer times causes disturbance.

From EP 0 293 894 A2 a retail shelving for merchandise is known having at least one shelf which is accessible at its front side for customers and can be pulled out from the rear side of the shelving facing away from the customer. The shelving provides the possibility of refilling with merchandise from the rear without impeding the customers.

Accordingly, it would be beneficial to provide a faster and more effective replacement of goods to be sold in refrigerating sales cabinets.

This object is solved by the subject matter of independent claim 1.

Exemplary embodiments of the invention include a shelf for a refrigerating sales cabinet for carrying goods to be sold comprising supporting rollers so as to be movable between a replacement position in which the shelf is at least partly positioned outside the refrigerating sales cabinet, and a sales position in the refrigerating sales cabinet.

Exemplary embodiments include a refrigerating sales cabinet comprising at least one shelf, as described above, and at least one supporting element supporting the rollers of the shelf and defining the sales position thereof.

Exemplary embodiments include a refrigerating sales cabinet comprising at least one supporting element and at least one carrying element for carrying a shelf for carrying goods to be sold. The carrying element is supported by the supporting element and is movable between the first position, in which the shelf is in a replacement position at least partly outside the refrigerating sales cabinet, and a second position, in which the shelf is in a sales position in the refrigerating sales cabinet.

Embodiments of the invention are described in greater detail below with reference to the accompanying drawings.
- Figure 1: shows a schematic side view of a first placement trolley and a first refrigerating furniture positioned at a distance;
- Figure 2: shows a schematic side view of the first placement trolley and the first refrigerating furniture in a state of supplying the first refrigerating furniture with goods display shelves;
- Figure 3: shows a schematic side view of a second placement trolley and a second refrigerating furniture positioned at a distance, wherein the embodiment of Figure 3 is not covered by the appended claims;
- Figure 4: shows a schematic side view of a third refrigerating furniture, wherein the embodiment of Figure 4 is not covered by the appended claims;
- Figure 5: shows a schematic side view of a fourth refrigerating furniture and the first placement trolley disposed behind it;
- Figure 6: shows a schematic side view of a third placement trolley and a fifth refrigerating furniture disposed at a distance; and
- Figure 7: shows the third placement trolley being positioned in a predetermined relative position to the fifth refrigerating furniture.

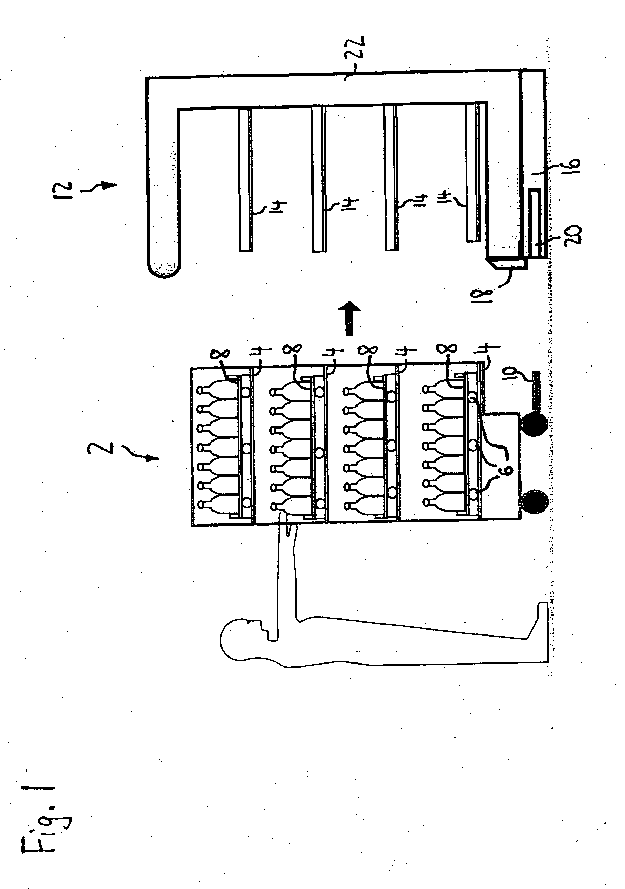

In the Figures 1 to 7, the side views depict the interior of the placement trolleys 2, 24 and 92 and the refrigerating furnitures 12, 34, 54, 78 and 98 without side walls of the refrigerating furnitures and without side walls, blinds or lateral grids of the placement trolleys.

Figure 1 shows a schematic side view of a first placement trolley 2 positioned at a distance from a first refrigerating furniture 12.

The first refrigerating furniture 12 has a conventional C-configuration with a back panel 22 and a foot region 16. At the front of the foot region 16 there is disposed a bumper 18 for keeping a placement trolley at a defined distance. There is a funnel 20 at a front side of the foot region 16 extending approximately to a third of the depth of the first refrigerating furniture 12. In the first refrigerating furniture 12 there are disposed four supporting elements/brackets 14 evenly spread over the overall inner height of the first refrigerating furniture 12 and extending forward from the back panel 22 directly to the front portion, where the door (not shown) is arranged.

The first placement trolley 2 comprises four pairs of lateral rails 4 disposed at the same height as the brackets 14 of the first refrigerating furniture 12. In the side view of Figure 1 only the left rails 4 of the respective pairs of rails 4 can be seen. On each of the pairs of rails 4, there is supported, by means of supporting rollers 6, a respective goods display shelf 8 carrying altogether seven bottles. In the embodiment of Figure 1 there are three rollers 6 arranged at the left edge of each shelf 8 that can be seen in the side view of Figure 1 and three rollers 6 arranged at the right edge thereof (not shown).

The first placement trolley 2 is movable by means of wheels and has a bolt/lance 10 at the front side of its foot region, arranged at the same height as the funnel 20 of the first refrigerating furniture 12.

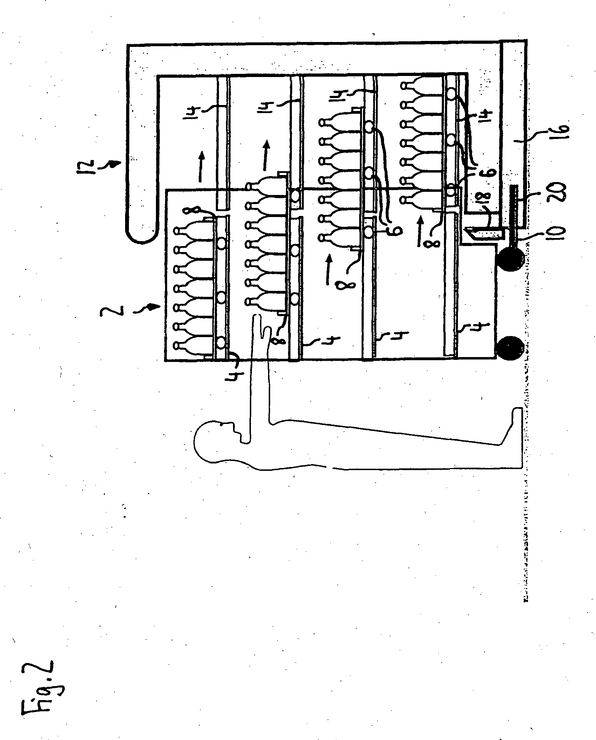

Figure 2 shows a schematic side view of the first placement trolley 2 and the first refrigerating furniture 12 in a state of supplying the first refrigerating furniture 12 with the goods display shelves 8.

In Figure 2, the lance 10 of the first placement trolley 2 is engaged in the funnel 20 of the first refrigerating furniture 12 and thus the first placement trolley 2 is docked in a predetermined relative position to the first refrigerating furniture 12.

The highest goods display shelf 8 is in the replacement position in the first placement trolley 2. The lowest goods display shelf 8 is in the sales position in the first refrigerating furniture 12, in which the rollers of the lowest shelf 8 are supported by the lowest bracket 14 of the first refrigerating furniture 12. The second and the third shelves 8 are shown during their movement between their replacement position in the first placement trolley 2 and their sales position on the second and third bracket 14 of the first refrigerating furniture 12. The direction of movement is depicted by arrows in Figure 2. The middle and the rear rollers 6 of the second goods display shelf 8 are supported by the rails 4 of the first placement trolley, the front rollers 6 of the second goods display shelf 8 are already supported by the second bracket 14 of the first refrigerating furniture 12. The rear rollers 6 of the third goods display shelf 8 are supported by the rails 4 of the first placement trolley, whereas the middle and the front rollers 6 of the third goods display shelf 8 are already supported by the third bracket 14 of the first refrigerating furniture 12. By the distributed arrangement of the rollers 6 on the goods display shelves 8, a gap between the rails 4 and the brackets 14 can easily be crossed.

As can be seen in Figure 2, the goods display shelves 8 carrying fresh goods to be sold can easily, fast, and efficiently be supplied to the first refrigerating furniture 12 as whole units. Tilting or derailing is reliably avoided.

In the same manner as described above, good display shelves 8 which are empty or carry unsold goods and which are positioned in the first refrigerating furniture 12 being supported by the brackets 14, can be removed from the sales position in the first refrigerating furniture 12 to the replacement position in the first placement trolley 2.

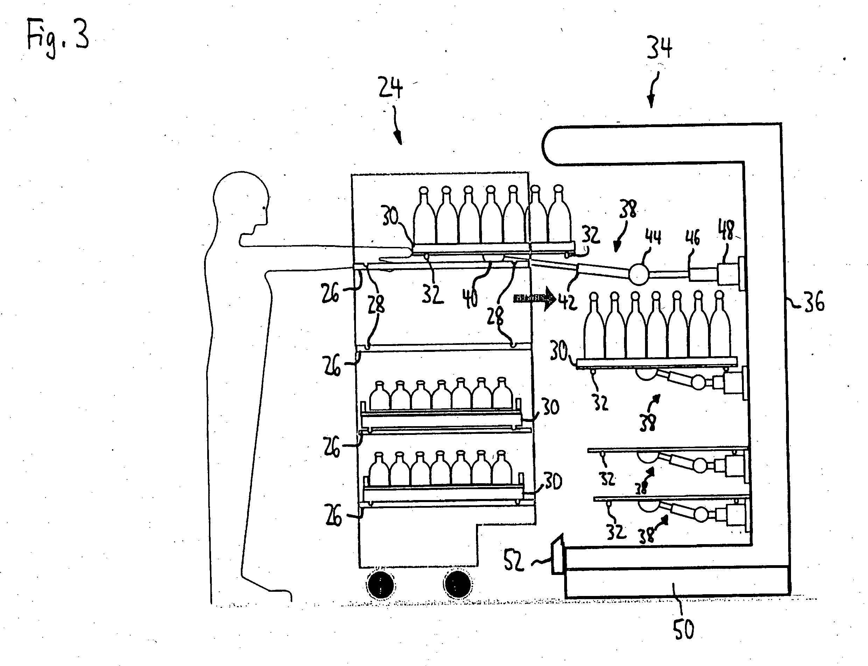

Figure 3 shows a schematic side view of a second placement trolley 24 positioned at a distance from a second refrigerating furniture 34, which are both not an embodiment of the invention.

The second refrigerating furniture 34 also has the conventional C-configuration. On its back panel 36 there are attached with their gripping arm bases 48 four gripping arms 38 at different heights. The supporting and gripping arms 38 comprise a telescopic front arm portion 42 with an arm head 40 attached to its distal end, a telescopic back arm portion 46 fixed to the arm base 48 and a hinge 44 disposed therebetween. The arm head 40 is capable of gripping an underside of a respective shelf, particularly having notches, recesses, or the like. Alternatively, a magnet mechanism is conceivable. By the telescopic arm portions 42 and 46, a horizontal movement of the arm head 40 out of the second refrigerating furniture 34 and into the refrigerating furniture 34 can be effected, by the hinge 44 the arm head 40 can be raised and lowered.

The second placement trolley 24 comprises four supporting members 26 at different heights, the supporting members having female positioning members 28 at its front and rear portions. For allowing movement of the arm head 40 at least partly in the second placement trolley 24, the supporting members 26 can be lateral supporting members 26 disposed at the left and side edges of the second placement trolley 24 providing a gap therebetween. Alternatively, the supporting members 26 can be plate-formed over the entire width of the second placement trolley 24 having a recess in the middle for allowing movement of the arm head 40 into the second placement trolley 24. The goods display shelves 30 comprise male positioning members 32 at its underside capable of engaging with the female positioning members of the supporting members 26.

The highest goods display shelf 30 is depicted in a position between the replacement position in the second placement trolley 24 and the sales position in the second refrigerating furniture 34. The second goods display shelf 30 is in the sales position in the second refrigerating furniture 34. The third and the fourth, lowest goods display shelves 30 are in the replacement position in the second placement trolley 24 with their male positioning members 32 engaged into the respective female positioning members 28 of the third and the fourth, lowest supporting members 26.

The goods display shelves 30 can be supplied from the replacement position in the second placement trolley 24 to the sales position in the second refrigerating furniture 34 by moving the arm head 40 under the goods display shelf 30, by gripping the goods display shelf 30 appropriately, by raising, by means of the hinge 44, the goods display shelves 30 such that their male positioning members 32 do no more engage the female positioning members 28 of the supporting member 26 and by moving the goods display shelf 30, by means of the telescopic arm portions 42 and 46 and the hinge 44, into the sales position in the second refrigerating furniture 34.

The goods display shelves 30 being empty or carrying unsold goods can be moved from the sales position in the second refrigerating furniture 34 by moving, by means of the telescopic arm portions 42 and 46 and the hinge 44, the goods display shelf 30 into the second placement trolley 24 in a position above the respective supporting member 26 and by lowering, by means of the hinge 44, the goods display shelf 30 such that its male positioning members 32 engage with the female positioning members 28 of the supporting members 26.

Thus a fast and reliable, semi-automatic or even wholly automatic exchange of the goods display shelves 30 as whole units can be effected.

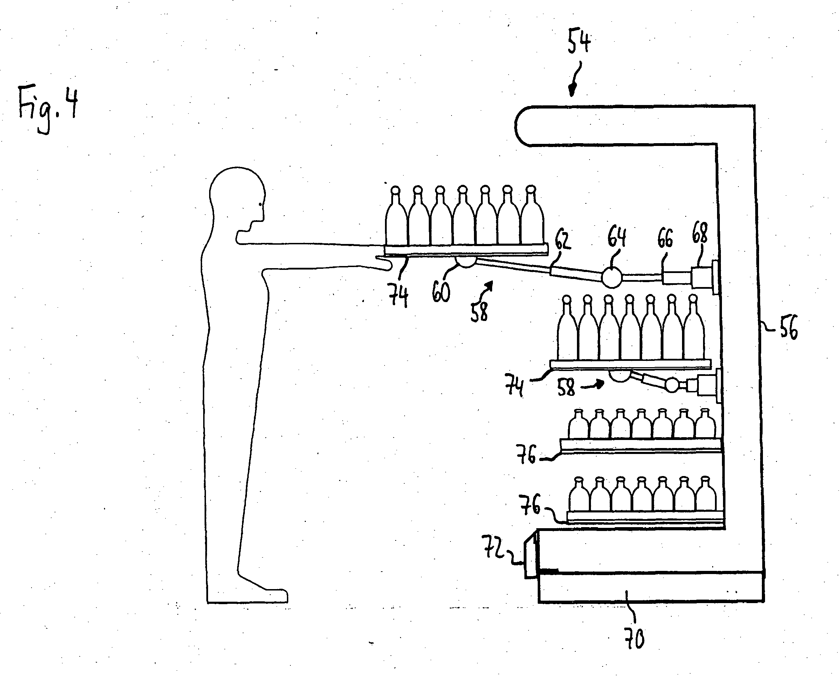

Figure 4 shows a schematic side view of a third refrigerating furniture 54, which is not part of the invention.

The third refrigerating furniture 54 is an embodiment having a combination of goods display shelves 74 supported by supporting and gripping arms 58 and fixed goods display shelves 76. The back panel 56, the bumper 72, and the foot region 70 of the third refrigerating furniture 54 correspond to the respective elements of the second refrigerating furniture 34.

The third refrigerating furniture 54 comprises two upper supporting and gripping arms 58 having an arm head 60, telescopic arm portions 62 and 66, a hinge 64 disposed therebetween and a gripping arm base 68, respectively. These supporting and gripping arms 58 correspond to the gripping arms 38 depicted in Figure 3, and they carry a good display shelf 74, respectively. The upper goods display shelf 74 is in a manual replacement position outside the third refrigerating furniture 54, and the second goods display shelf 74 is in a sales position within the third refrigerating furniture 54. The two lower shelves are fixed goods display shelves 76.

With the third refrigerating furniture 54, the replacement of the goods display shelves 74 and 76 as whole units can be carried out manually.

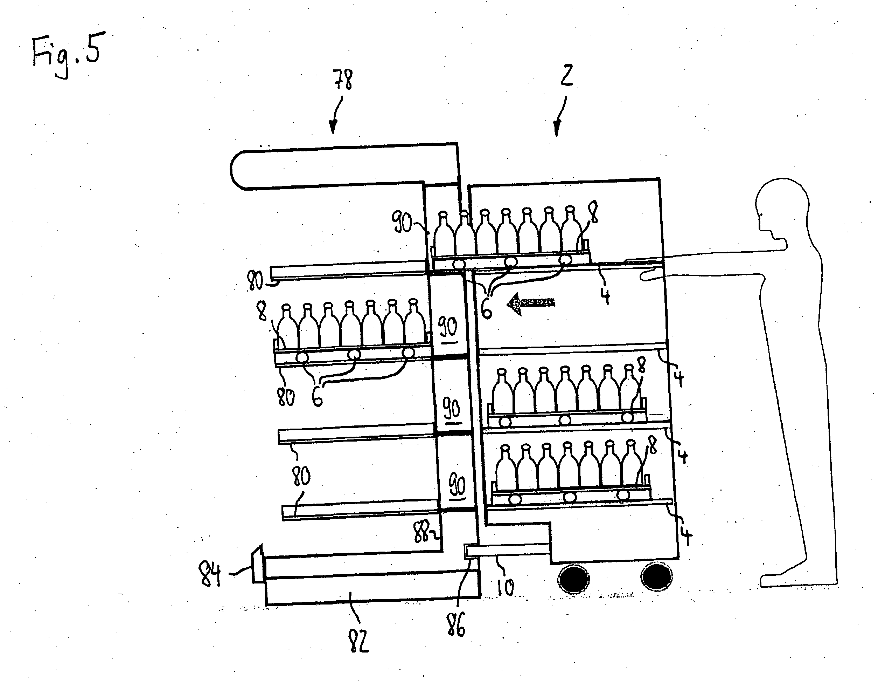

Figure 5 shows a schematic side view of a fourth refrigerating furniture 78 and the first placement trolley 2 disposed behind it.

The fourth refrigerating furniture 78 substantially corresponds to the first refrigerating furniture 12 and comprises a C-type configuration with a back panel 88 and a foot region 82 as well as brackets 80 evenly spread over the overall inner height of the fourth refrigerating furniture 78. Unlike the first placement trolley 2, the fourth refrigerating furniture 78 comprises back panel openings 90 for each bracket 80 in its back panel 88. These back panel openings 90 can be doors, blinds or the like. Further, the funnel 86 for engaging with a lance 10 of a placement trolley is arranged at the rear side of the fourth refrigerating furniture 78.

The lower two shelves 8 are positioned in their replacement position in the first placement trolley 2, the second but highest goods display shelf 8 is positioned in the sales position in the fourth refrigerating furniture 78, and the highest goods display shelf 8 is shown in its movement between the replacement position and the sales position, the direction of movement being depicted by an arrow.

Prior to the replacement of goods, the lance 10 is engaged with the funnel 86 of the fourth refrigerating furniture 78 and thus the first placement trolley 2 is docked in a predetermined relative position to the fourth refrigerating furniture 78.

The supplying of goods display shelves 8 carrying fresh goods to be sold and the removing of empty goods display shelves 8 or goods display shelves 8 carrying unsold goods is carried out by opening the back panel openings 90, in particular the doors, blinds, or the like and by horizontally moving the shelves 8 from the replacement position in the sales position or from the sales position in the replacement position, respectively, and by closing the back panel openings 90 again.

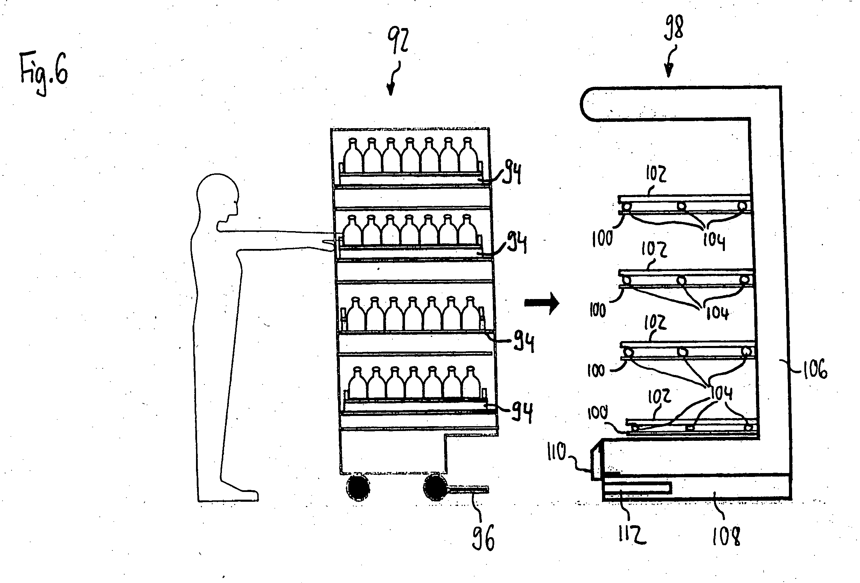

Figure 6 shows a schematic side view of a third placement trolley 92 disposed at a distance from a fifth refrigerating furniture 98.

The fifth refrigerating furniture 98 has a C-type configuration with a back panel 106, with a foot region 108 having a funnel 112 at the front side thereof and having a bumper 110 corresponding to the first refrigerating furniture 12. Evenly spread over the overall inner height of the fifth refrigerating furniture 98, there are arranged four supporting elements 100 supporting carrying elements/brackets 102 which are movable by supporting rollers 104. In the embodiment of Figure 6, three rollers 104 at the left edge of the brackets 102 are depicted, and the brackets 102 also comprise three rollers on the right edge (not shown).

The third placement trolley 92 comprises four goods display shelves 94 and a lifting/lowering device (not shown) to move these goods display shelves 94 between an upper goods display shelf transport position which is depicted in Figure 6, and a lower shelf replacement position. The lifting/lowering device can particularly be a chain mechanism being arranged at the side walls of the third placement trolley 92, and it can comprise supporting elements for the goods display shelves 94.

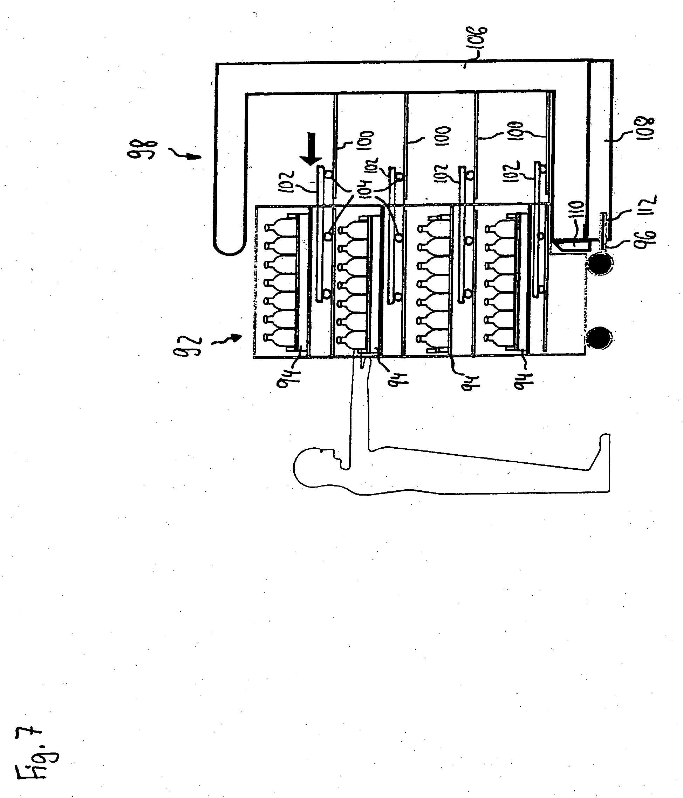

Figure 7 shows the third placement trolley 92 being positioned in a predetermined relative position to the fifth refrigerating furniture 98.

This predetermined relative position is obtained by engaging the lance 96 of the third placement trolley 92 with the funnel 112 of the fifth refrigerating furniture 98.

The brackets 102 are shown in an intermediate position between the fifth refrigerating furniture 98 and the third placement trolley 92. The brackets 102 can be moved between a first position in the third placement trolley 92 and a second position in the fifth refrigerating furniture 98.

The supplying of a fifth refrigerating furniture 98 with whole goods display shelves 94 carrying fresh goods to be sold is effected by docking the third placement trolley 92 in the predetermined relative position to the fifth refrigerating furniture 98 via their lance 96 and funnel 112, by moving the brackets 102 from the second position in the fifth refrigerating furniture 98 to a first position in the third placement trolley 92 directly underneath the goods display shelves 94, by lowering, by means of the lifting/lowering device, the goods display shelves 94 from the transport position depicted in Figure 6 to a replacement position, and by moving the brackets 102 together with the goods display shelves 94 from their first position, in which the goods display shelves are in the replacement position, to the second position, in which the goods display shelves are in a sales position in the fifth refrigerating furniture 98.

The removing of empty goods display shelves 94 or goods display shelves 94 carrying unsold goods is effected in the same manner, wherein the brackets 102 are moved from their second into their first position and wherein the goods display shelves 94 are raised by the lifting/lowering device from their replacement position into their transport position.

By the refrigerating furnitures and the replacement trolleys, as described above, an automatic or semi-automatic supply or removal of goods display shelves as whole units can be effected with high speed and high efficiency. The disturbance caused in the shops and supermarkets can be reduced, since a fast handling, a rationalization and an increase in efficiency are obtained. At the same time the supply and removal of whole goods display shelves of the refrigerating furniture is carried out reliably and a tilting, derailing, or even loss of goods can be avoided.

Exemplary embodiments of the invention, as described above, allow for a fast placement of new goods to be sold and and for a fast removal of unsold goods as one unit from the refrigerating sales cabinet together with the entire shelf without affecting the sales space. The exchange can take place by a substantially horizontal movement of the shelves via the supporting rollers, the friction of which is quite small and thus the replacement of the shelf can be effected easily without considerable force to be applied.

In an embodiment of the invention, the shelf comprises at least two, particularly three rollers arranged at the left thereof and at least two, particularly three rollers arranged at the right edge thereof. By the provision of such rollers, a particularly easy and fast replacement of such shelves between a refrigerating sales cabinet and a placement trolley can be provided.

Exemplary embodiments of the invention, as described above, allow for a safe crossing of the gap between the refrigerating sales cabinet and the placement trolley without tilting, even in the event that the placement trolley is positioned at a distance from the refrigerating sales cabinet. The placement trolley according to this embodiment comprising the supporting element(s) and the shelf/shelves provides fast and easy replacement of the goods, since the goods are exchanged together with the shelf/shelves as one unit, respectively.

In an embodiment, two supporting elements are provided which are respectively arranged along the side walls of the replacement trolley. These supporting elements can be hooked in respective holes in the side walls of the refrigerating sales cabinet thus being easily adjustable in height. Alternatively the supporting elements can be fixed to the side walls differently, e.g. by screws, or they can be formed integrally in the side walls.

According to another embodiment of the invention, the supporting elements are rails or sections providing a safe side guidance for the shelves and avoiding tilting or derailing. This embodiment is particularly useful in the case when the placement trolley is positioned at the distance to the refrigerating sales cabinet, since even in this case a reliable replacement of the shelves can be provided.

The placement trolley further comprises a locking/unlocking device for preventing and enabling movement of the shelf out of the placement trolley. Such a locking/unlocking device can be provided separately for each shelf of the placement trolley. Alternatively one common locking/unlocking device can be provided for all the shelves of a placement trolley.

By such a placement trolley, an automatic or semi-automatic replacement of whole shelves being empty or carrying unsold goods with new shelves carrying fresh goods to be sold can be effected and thus the time needed for replacing goods in the refrigerating sales cabinet can be reduced. Furthermore, the placement trolley comprising at least one supporting gripping arm is flexible since it can handle shelves in different heights.

The supporting and gripping arm only comprises one telescopic arm portion, but no hinge.

The at least one supporting and gripping arm comprises a front arm portion, a back arm portion, a hinge disposed therebetween, and an arm head at the front arm portion for supporting a shelf. The back arm portion is attached to the back panel of the placement trolley and at least one of the arm portions is telescopic. Such a supporting and gripping arm is robust, it can due to its at least one telescopic gripping arm portion and its hinge handle big distances between the placement trolley and the refrigerating sales cabinet and different heights for the shelves.

The arm head of the supporting and gripping arm is pivotable and rotatable, respectively, thus making the supporting and gripping arm more versatile.

According to a further embodiment of the invention, the placement trolley, as described above, has in its foot region of bolt or a lance capable of engaging with a funnel of a refrigerating sales cabinet thus providing docking of the placement trolley in a predetermined relative position to the refrigerating sales cabinet. Thus the placement trolley is guided in an exactly fitting manner via a funnel system via a bolt or a lance in the foot region, thereby providing particularly fast and user-friendly replacement of the shelves carrying goods.

Further, the trolley according to any of the embodiments as described above can be protected against loss of goods during transport by means of blinds and lateral grids.

Exemplary embodiments of the invention, as descibed above, allow for a fast, easy and user-friendly replacement of whole shelves being empty or carrying unsold or fresh goods can be effected.

According to an embodiment of the invention, at least one opening, blind or door is provided in the back panel of the refrigerating sales cabinet for replacement of goods. The at least one opening, blind or door enables a movement of the shelf between the replacement position, in which the shelf is at least partly positioned behind the refrigerating sales cabinet, and the sales position in the refrigerating sales cabinet. By this embodiment supplying and removing of the goods and shelves from behind, especially a cooling chamber positioned behind the refrigerating sales cabinet, can be attained.

In a further embodiment of the invention, a locking/unlocking device for preventing and enabling a movement of the shelf out of the refrigerating sales cabinet is provided. In a first alternative, such a locking/unlocking device is a mechanical locking/unlocking device, particularly a notch or a price strip fastened in front of the shelf. Alternatively, the locking/unlocking device is a magnetic switch. Other realizations for the locking/unlocking device are also conceivable. A separate lock-ing/unlocking device can be provided for each shelf, however it is also possible to provide one common locking/unlocking device for all the shelves of a refrigerating sales cabinet.

In the embodiment of the invention comprising at least one supporting element and at least one carrying element for carrying a shelf for carrying goods to be sold, sliding or rolling elements, particularly sliding bearings or rollers can be provided at the carrying element. In particular such sliding or rolling elements can be attached at the side edges of the carrying elements. This refrigerating sales cabinet provides a fast, easy, and reliable exchange of whole shelves being empty or carrying unsold or fresh goods, and tilting and derailing can be safely avoided. According to an embodiment of the invention, the refrigerating sales cabinet has a funnel in its foot region for engaging with a bolt or a lance of a placement trolley and thus docking of the placement trolley in a predetermined relative position to the refrigerating sales cabinet can be attained making the replacement of the shelves particularly user-friendly.

By utilizing mechanical means for a replacement of whole shelves being empty or carrying unsold or fresh goods, the efficiency can be improved and the manpower and time needed for replacement of shelves can be reduced.

In an embodiment, the replacement position is in a placement trolley which is positioned before or behind the refrigerating sales cabinet. By the provision of such a placement trolley, the efficiency of the replacement of the shelves can be further improved. As mechanical means, a placement trolley comprising at least one shelf having supporting rollers, as described above, together with a refrigerating sales cabinet comprising at least one supporting element supporting the supporting rollers of the shelf, as described above, or a refrigerating sales cabinet comprising at least one carrying element for carrying a shelf which is supported by a supporting element and which is movable between a first and a second position, as described above, can be utilized.

### List of Reference Numbers

- 2: first placement trolley
- 4: rails
- 6: supporting rollers
- 8: goods display shelves
- 10: bolt/lance
- 12: first refrigerating furniture
- 14: brackets
- 16: foot region
- 18: bumper
- 20: funnel
- 22: back panel
- 24: second placement trolley
- 26: supporting members
- 28: female positioning members
- 30: goods display shelves
- 32: male positioning members
- 34: second refrigerating furniture
- 36: back panel
- 38: supporting and gripping arms
- 40: arm head
- 42: telescopic front arm portion
- 44: hinge
- 46: telescopic back arm portion
- 48: arm base
- 50: foot region
- 52: bumper
- 54: third refrigerating furniture
- 56: back panel
- 58: supporting and gripping arms
- 60: arm head
- 62: telescopic front arm portion
- 64: hinge
- 66: telescopic back arm portion
- 68: arm base
- 70: foot region
- 72: bumper
- 74: goods display shelves
- 76: fixed goods display shelves
- 78: fourth refrigerating furniture
- 80: brackets
- 82: foot region
- 84: bumper
- 86: funnel
- 88: back panel
- 90: back panel openings
- 92: third placement trolley
- 94: goods display shelves
- 96: bolt/lance
- 98: fifth refrigerating furniture
- 100: supporting elements
- 102: brackets
- 104: supporting rollers
- 106: back panel
- 108: foot region
- 110: bumper
- 112: funnel

## Claims

1. Refrigerating sales cabinet (12; 78) comprising
at least one shelf (8), provided for carrying goods to be sold, comprising supporting rollers (6) so as to be movable between a replacement position, in which the shelf (8) is at least partly positioned outside the refrigerating sales cabinet (12), and a sales position in the refrigerating sales cabinet (12),
at least one supporting element (14; 80) supporting the supporting rollers (6) of the shelf (8) and defining the sales position thereof,
and a locking/unlocking device for preventing and enabling a movement of the shelf (8) out of the refrigerating sales cabinet (12; 78), **characterized in that**
the locking/unlocking device is a mechanical locking/unlocking device in the form of a notch or a price strip fastened in front of the shelf, or a magnetic switch.

2. Refrigerating sales cabinet (12; 78) of claim 1,
wherein the shelf (8) comprises at least two supporting rollers (6) arranged at the left edge thereof and at least two supporting rollers (6) arranged at the right edge thereof.

3. Refrigerating sales cabinet (78) of claim 1 or 2,
wherein at least one opening (90), blind or door is provided in the back panel (88) of the refrigerating sales cabinet (78) for replacement of goods, the at least one opening (90), blind or door enabling movement of the shelf (8) between the replacement position and the sales position in the refrigerating sales cabinet (78).

4. Refrigerating sales cabinet (12;98) of any of claims 1 to 3,
wherein the refrigerating sales cabinet (12; 34; 98) has a funnel (20; 86; 112) in its foot region (16; 82; 108) capable of engaging with a bolt or a lance (10; 96) of a placement trolley (2; 92) thus providing docking of the placement trolley (2; 92) in a predetermined relative position to the refrigerating sales cabinet (12; 98).

5. Refrigerating sales cabinet (98) comprising
at least one supporting element (100); and
at least one carrying element (102) for carrying a shelf (94), provided for carrying goods to be sold, the carrying element (102) being supported by the supporting element (100) and being movable between a first position, in which the shelf (94) is in a replacement position at least partly outside the refrigerating sales cabinet (98), and a second position, in which the shelf (94) is in a sales position in the refrigerating sales cabinet (98),
**characterized in that**
the refrigerating sales cabinet (12; 98) has a funnel (20; 86; 112) in its foot region (16; 82; 108) capable of engaging with a bolt or a lance (10; 96) of a placement trolley (2; 92) thus providing docking of the placement trolley (2; 92) in a predetermined relative position to the refrigerating sales cabinet (12; 98).

## Patentansprüche

1. Kühlverkaufsmöbel (12; 78) aufweisend:
wenigstens einen Regalboden (8), der dazu vorgesehen ist, zu verkaufende Waren abzustützen, und der Stützrollen (6) aufweist, so dass er zwischen einer Austauschposition, in welcher der Regalboden (8) wenigstens teilweise außerhalb des Kühlverkaufsmöbels (12) positioniert ist, und einer Verkaufsposition in dem Kühlverkaufsmöbel (12) beweglich ist,
wenigstens ein Stützelement (14; 80), das die Stützrollen (6) des Regalbodens (8) abstützt und seine Verkaufsposition definiert, und
eine Sperr-/Entsperreinrichtung, um eine Bewegung des Regalbodens (8) aus dem Kühlverkaufsmöbel (12; 78) zu verhindern und zu ermöglichen,
**dadurch gekennzeichnet, dass**
die Sperr-/Entsperreinrichtung eine mechanische Sperr-/Entsperreinrichtung in der Form einer Raste oder eines Preisschilds, das vorne an dem Regalboden angebracht ist, oder ein magnetischer Schalter ist.

2. Kühlverkaufsmöbel (12; 78) nach Anspruch 1,
wobei der Regalboden (8) wenigstens zwei Stützrollen (6), die an dem linken Rand davon angeordnet sind, und wenigstens zwei Stützrollen (6) aufweist, die an dem rechten Rand davon angeordnet sind.

3. Kühlverkaufsmöbel (78) nach Anspruch 1 oder 2,
wobei wenigstens eine Öffnung (90), Abdeckung oder Tür in der Rückseite (88) des Kühlverkaufsmöbels (78) vorgesehen ist, zum Austauschen von Waren, wobei die wenigstens eine Öffnung (90), Abdeckung oder Tür eine Bewegung des Regalbodens (8) zwischen der Austauschposition und der Verkaufsposition in dem Kühlverkaufsmöbel (78) ermöglicht.

4. Kühlverkaufsmöbel (12; 98) nach einem der Ansprüche 1 bis 3,
wobei das Kühlverkaufsmöbel (12; 34; 98) einen Trichter (20; 86; 112) in seiner Fußregion (16; 82; 108) aufweist, der mit einem Bolzen oder einer Lanze (10; 96) eines Bestückungswagens in Eingriff bringbar ist, um ein Andocken des Bestückungswagens (2; 92) in einer vorbestimmten Relativposition zu dem Kühlverkaufsmöbel (12; 98) vorzusehen.

5. Kühlverkaufsmöbel (98) aufweisend
wenigstens ein Abstützelement (100); und
wenigstens ein Trageelement (102) zum Tragen eines Regalbodens (94), das zum Tragen von zu verkaufenden Waren vorgesehen ist, wobei das Trageelement (102) von dem Stützelement (100) abgestützt wird und zwischen einer ersten Position, in welcher der Regalboden (94) in einer Austauschposition wenigstens teilweise außerhalb des Kühlverkaufsmöbels (98) ist, und einer zweiten Position, in welcher der Regalboden (94) in einer Verkaufsposition in dem Kühlverkaufsmöbel (98) ist, beweglich ist,
**dadurch gekennzeichnet, dass**
das Kühlverkaufsmöbel (12; 98) einen Trichter (20; 86; 112) in der Fußregion (16; 82; 108) aufweist, der mit mit einem Bolzen oder einer Lanze (10; 96) eines Bestückungswagens (2; 92) in Eingriff bringbar ist, um ein Andocken des Bestückungswagens (2; 92) in einer vorbestimmten Relativposition zu dem Kühlverkaufsmöbel (12; 98) vorzusehen.

## Revendications

1. Armoire de vente réfrigérée (12 ; 78) comprenant
au moins une étagère (8) conçue pour supporter des marchandises présentées à la vente, munie de rouleaux de support (6) lui conférant une mobilité entre une position de remplacement, dans laquelle l'étagère (8) se trouve au moins partiellement à l'extérieur de l'armoire de vente réfrigérée (12), et une position de vente située dans ladite armoire de vente réfrigérée (12),
au moins un élément de soutien (14 ; 80) soutenant les rouleaux de support (6) de l'étagère (8), et définissant la position de vente de cette dernière,
et un dispositif de verrouillage/déverrouillage conçu pour interdire et autoriser un mouvement de l'étagère (8) la faisant sortir de l'armoire de vente réfrigérée (12 ; 78), **caractérisée par le fait que**
le dispositif de verrouillage/déverrouillage est un dispositif mécanique de verrouillage/déverrouillage revêtant la forme d'une encoche ou d'une bande d'affichage de prix fixée à l'avant de l'étagère, voire d'un commutateur magnétique.

2. Armoire de vente réfrigérée (12 ; 78) selon la revendication 1,
dans laquelle l'étagère (8) comprend au moins deux rouleaux de support (6) installés sur son bord de gauche, et au moins deux rouleaux de support (6) installés sur son bord de droite.

3. Armoire de vente réfrigérée (78) selon la revendication 1 ou 2,
dans laquelle au moins une ouverture (90), une occultation ou une porte est prévue dans le panneau arrière (88) de ladite armoire de vente réfrigérée (78) pour le remplacement de marchandises, l'ouverture (90), l'occultation ou la porte à présence minimale autorisant un mouvement de l'étagère (8) entre la position de remplacement et la position de vente située dans ladite armoire de vente réfrigérée (78).

4. Armoire de vente réfrigérée (12 ; 98) selon l'une quelconque des revendications 1 à 3,
ladite armoire de vente réfrigérée (12 ; 34 ; 98) présentant, dans sa région d'embase (16 ; 82 ; 108), une cavité (20 ; 86 ; 112) apte à coopérer avec un tenon ou une broche (10 ; 96) d'un chariot (2 ; 92) de mise en place, provoquant ainsi un blocage à demeure dudit chariot (2 ; 92) de mise en place dans une position prédéterminée vis-à-vis de ladite armoire de vente réfrigérée (12 ; 98).

5. Armoire de vente réfrigérée (98) comprenant
au moins un élément de soutien (100) ; et
au moins un élément de support (102) conçu pour supporter une étagère (94) prévue pour supporter des marchandises présentées à la vente, ledit élément de support (102) étant soutenu par ledit élément de soutien (100) et étant mobile entre un premier emplacement, auquel l'étagère (94) occupe une position de remplacement au moins partiellement à l'extérieur de l'armoire de vente réfrigérée (98), et un second emplacement auquel ladite étagère (94) occupe une position de vente située dans ladite armoire de vente réfrigérée (98),
**caractérisée par le fait que**
l'armoire de vente réfrigérée (12 ; 98) présente, dans sa région d'embase (16 ; 82 ; 108), une cavité (20 ; 86 ; 112) apte à coopérer avec un tenon ou une broche (10 ; 96) d'un chariot (2 ; 92) de mise en place, provoquant ainsi un blocage à demeure dudit chariot (2 ; 92) de mise en place dans une position prédéterminée vis-à-vis de ladite armoire de vente réfrigérée (12 ; 98).
